# EUROPEAN PATENT APPLICATION

(11) **EP 0 960 826 A2**
(43) Date of publication of application: **01.12.1999**
(21) Application number: 99301370.5
(22) Date of filing: 24.02.1999
(51) Int. Cl.: B65D 81/34, B29C 47/00, B29C 43/22, B29C 51/00

(54) **Method for the production of extruded sheets and microwaveable containers obtained from said sheets**

(30) Priority: 03.03.1998 US 33831
(71) Applicant: Fort James Corporation, Deerfield, IL 60015-0089 (US)
(72) Inventor: McCarthy, Donald C., Appleton, WI 54911 (US); Rogers, Richard J., Neenah, WI 54956 (US); Littlejohn, Mark B., Appleton, WI 54914 (US)
(74) Representative: Cropp, John Anthony David

(57) **Abstract**

Disposable food contact compatible microwaveable containers having at least one undulent surface are disclosed. These containers including trays, bowls, plates, cups, buckets, souffle' dishes and lids are prepared from foamed polypropylene or foamed propylene-ethylene copolymer and blends wherein an endothermic blowing agent coated with polystyrene or alpha methyl styrene is employed. These containers exhibit an undulent surface on at least one side and have a melting point of not less than 250°F, and they are dimensionally stable at temperatures up to at least 250°F and exhibit sufficient toughness to resist cutting with serrated disposable flatware.

## Description

### Background of the Invention

This invention relates to disposable food contact compatible microwaveable containers including plates, bowls, cups, trays, buckets, souffle' dishes, lids and related articles of manufacture useful for preparation, storage, delivery, and serving of food, wherein convenience and low cost are of paramount importance. Nevertheless, appearance and tactile characteristics of the plate, container, etc., are important for consumer preference. The suitability of these disposable articles of manufacture for microwave cooking, or heating of food, has an important place in today's marketplace. Both the commercial and retail market components need an aesthetically pleasing microwaveable, disposable, rigid and strong container, plate, and related articles of manufacture. This invention is directed to economically meeting that need and provides containers and plates comprising an extruded sheet of foamed polypropylene or foamed propylene-ethylene copolymer or blend including an endothermic blowing agent coated with polystyrene or poly-alpha-methylstyrene and mixtures of these.

These disposable microwaveable containers and plates exhibit (a) a rolling undulent surface on at least the food contact side of such container, (b) a melting point of no less than about 250°F, said container or plate being dimensionally stable and resistant to grease, sugar, and water at temperatures up to at least 220°F and exhibiting sufficient toughness to be resistant to cutting by serrated disposable flatware. Microwaveable and disposable containers and plates not including fillers such as mica or talc having all the aforementioned properties are not known in the prior art. In U.S. Patent 5,377,860, assigned to assignee of the present patent application, a double seal food container is disclosed. The composition and properties of the container differ from the present invention since a foamed polyolefin composition is not suggested or disclosed and the container does not have the thermal properties of the containers disclosed herein. The containers disclosed in European Patent Application D544,429A1 do not suggest or disclose a container which can meet the thermal properties of the container of the present invention. In EP-A-0.841.150, polypropylene mica filled containers are disclosed. In EP-A-0.897.948, mica and talc filled polypropylene containers are disclosed. These references do not disclose foamed rolling undulent polyolefin containers made from polypropylene or polypropylene polyethylene copolymer or blend.

### Summary of the Invention

Microwaveable, disposable, rigid, strong and food contact compatible containers and plates have been prepared. These disposable and microwaveable articles of manufacture exhibit a melting point of not less than 250°F, suitably 300°F to 372°F, or preferably 330°F to 372°F. These microwaveable, food contact compatible containers and plates are dimensionally stable and resistant to grease, sugar, and water at temperatures of at least 220°F and are of sufficient toughness to be resistant to cutting by serrated disposable flatware. These containers, in the form of disposable lunch (8.75 inch) and dinner plates (10.25 inch), exhibit a SSI rigidity of at least 400 grams per 0.5 inch at a basis weight of about 300 Ibs. per 3000 square foot ream. At a basis weight of about 317, SSI rigidity is about 446 grams per 0.5 inches; and at a basis weight of about 420, SSI rigidity is about 500 grams. The containers and plates of this invention answer a long felt need for products which can withstand the severe conditions of a microwave oven when common foods are microwaved during food cooking and reconstituting processes.

It is believed competing commercial polystyrene type plates cannot withstand the high temperatures generated in the microwave during food contact and either significantly warp or deform when the common food products are placed on them. Under the usual microwaving conditions with high grease content foods, the prior art plates tend to deform and flow to the point where parts of the plate became adhered to the inside of the microwave oven. For disposable plates and containers, appearance and feel are important attributes. A significant property of the containers and plates of this invention is their cut resistance. These rigid articles of manufacture are of sufficient toughness to be resistant to cutting by serrated disposable flatware.

### Brief Description of the Drawings

The present invention will become more fully understood from the detailed description given herein below and the accompanying drawings, which are given by way of illustration only, and thus, are not limitative of the present invention and wherein:

Figure 1 is a schematic flow diagram of the sheet extrusion process.

Figure 2 is a schematic flow diagram of the thermoforming process for the manufacture of plates and containers.

Figure 3 is a drawing of a plate included in this invention.

Figure 4 is a cross sectional view of the plate of Figure 3.

Figure 5 is a radial cross section of the plate of Figure 3.

Figure 6 is a schematic profile of the plate shown in Figure 3 beginning from the center line of the plate.

Figure 7 is a drawing of a plate included in this invention.

Figure 8 is a cross sectional view of the plate of Figure 7.

Figure 9 is a radial cross-section of the plate of Figure 7.

Figure 10 is a schematic profile of the plate shown in Figure 7, beginning from the center line.

Figure 11 is a drawing of a tray included in this invention.

Figure 12 is a cross section of a tray of Figure 11.

Figure 13 is a radial cross section of the tray of Figure 11.

Figure 14 is a schematic profile of the tray shown in Figure 11 beginning from the center line.

Figure 15 is a drawing of a bowl included in this invention.

Figure 16 is a cross sectional view of the bowl of Figure 15.

Figure 17 is a radial cross section of the bowl of Figure 15.

Figure 18 is a schematic profile of the bowl shown in Figure 15 beginning from the center line.

Figure 19 is a drawing of a food container included in this invention.

Figure 20 is a scanning electron photomicrograph of a foamed plate of this invention showing the undulatory food contact surface of the plate.

Figure 21 is a scanning electron photomicrograph of the foamed plate of this invention showing the cross section and eating surface of the undulent plate.

Figure 22 is a scanning electron photomicrograph of a foamed plate of this invention exhibiting the rolling undulent food contact surface of the plate.

Figure 23 is a scanning electron photomicrograph of an unfoamed polypropylene sheet showing the cross section and the eating surface without exhibiting the rolling undulent surface.

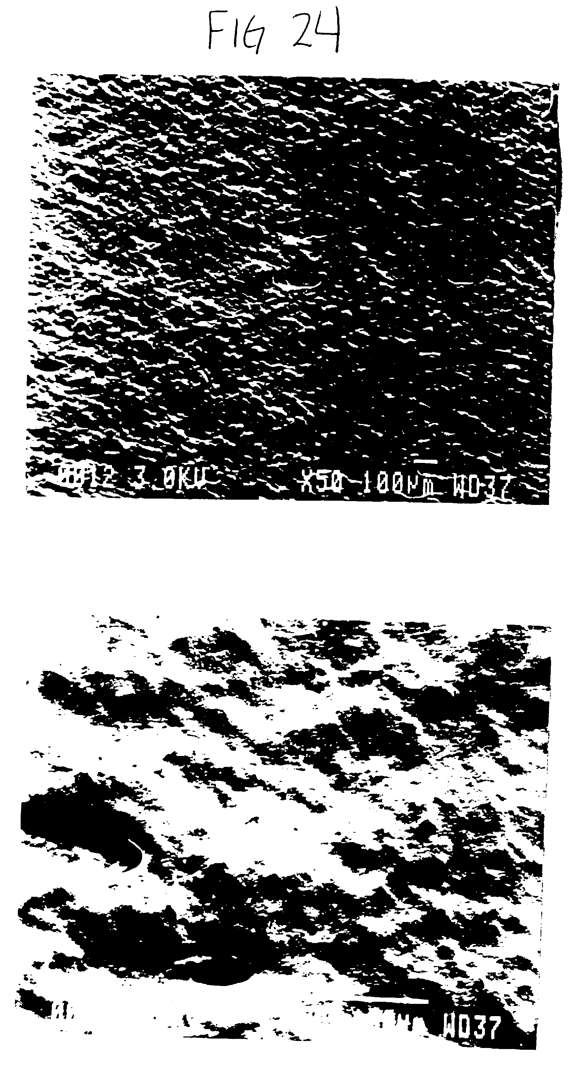

Figure 24 is a scanning electron photomicrograph of a commercial foamed polypropylene plate not displaying a rolling undulent surface.

### Detailed Description of Preferred Embodiments of the Invention

The aesthetically pleasing microwaveable disposable, rigid and strong containers and plates comprise foamed isotactic polypropylene and foamed propylene-ethylene copolymer, or blends. Suitably these polyolefins include an endothermic blowing agent coated with polystyrene or poly-alpha-methylstyrene.

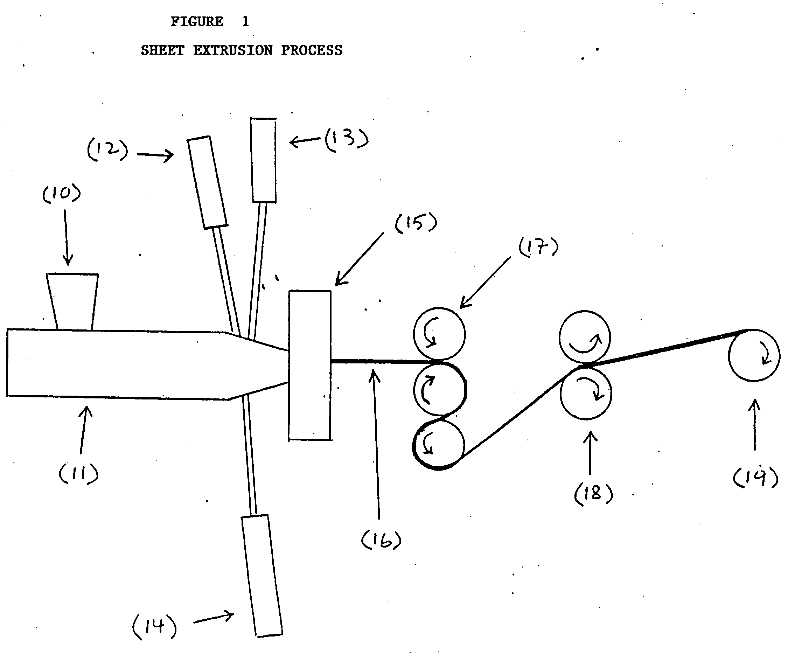

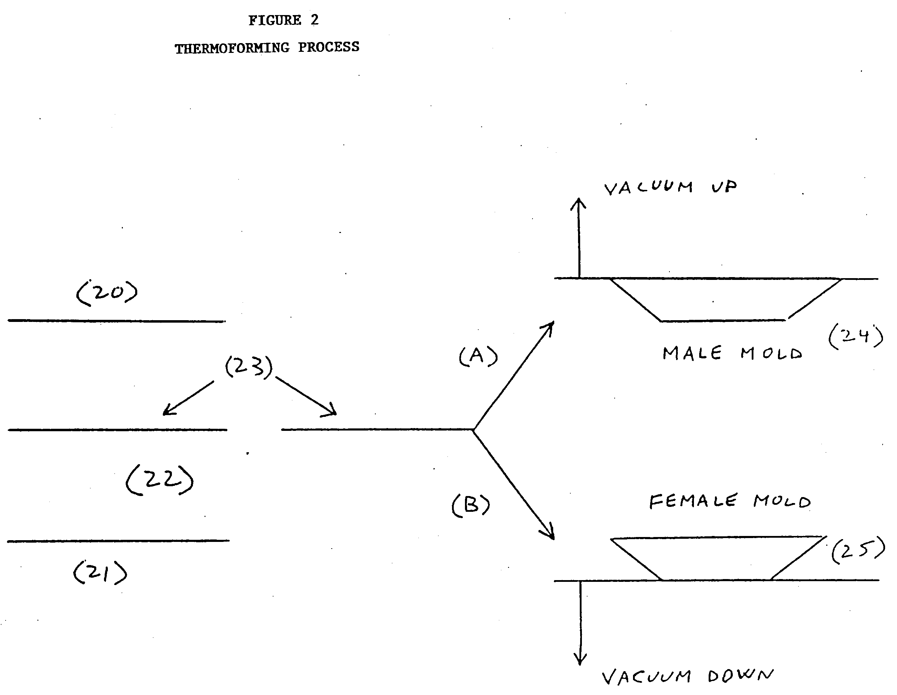

The containers and plates of this invention are preferably formed from a sheet which has been extruded as shown in Figure 1 and then thermoformed as shown in Figure 2 to produce a rolling undulent surface. For some applications, an undulent surface may not be required and our process is adapted for the manufacture of such containers. For foamed polyolefins, the polyolefin mixture containing the endothermic blowing agent encapsulated in polystyrene or alpha methyl polystyrene is conveyed into the feed section addition point of a twin screw compounding extruder. Alternatively, the components are advantageously fed separately into the same or at different points of addition using combinations of the volumetric and/or gravimetric (i.e., loss in weight type) feeders. The foamed extruded sheet is a foamed isotactic polypropylene, or a foamed propylene-ethylene copolymer or blend wherein the ethylene moiety usually comprises less than ten mole percent. Isotactic polypropylene homopolymers are preferred. The endothermic blowing agent suitably has the formula HOOC-R-COOH and includes alkali metal salts thereof wherein R is aliphatic of 1 to 25 carbon atoms which may contain one or more hydroxy substituents and may also contain unsaturation. It is preferred that the blowing agent be coated with polystyrene or alpha methyl polystyrene. Thus a low molecular weight polystyrene or alpha methyl polystyrene is required to produce the rolling undulated foamed polyolefin containers of this invention.

This invention solves a long standing problem in the art of how to form containers and other articles of commerce having a rolling undulent surface from foamed polyolefins, particularly polypropylene and polypropylene polyethylene copolymers or blends at reasonable cost. Prior to this invention, foamed rolling undulatory polyolefin containers and plates having a rolling undulent surface have not been produced since there was no effective foaming process to manufacture these low priced polyolefin articles of commerce. Polypropylene and polypropylene polyethylene copolymers or blends have a higher melt temperature than polystyrene and therefore containers and plates having a rolling undulent surface on the food side prepared from these foamed polyolefins are suitable for use in heating food items taken from freezers and placed directly into microwave ovens. The economic significance of this invention is that expensive high melt strength polyolefins do not have to be used. Instead polyolefins having a low melt strength are suitable. Also, foaming the polyolefins allows the production of a higher caliper sheet with less material thus ensuring a competitive article of manufacture. The containers and plates of this invention have a pleasing rolling undulent surface and can be manufactured at competitive prices, while having physical and thermal properties required for microwave heating for which polystyrene products are generally unsuitable.

The styrene encapsulated blowing agent is suitably selected from the following: citric acid, fumaric acid, tartaric acid, sodium hydrogen citrate, monosodium citrate and mixtures thereof. Advantageously, the blowing agent is a combination of citric acid and sodium carbonate or a mixture of monosodium citrate and Na HCO₃ in a molar ratio of 1:2 to 1:3.

The preferred blowing agent is SAFOAM® FP which is a fine powdered sodium bicarbonate and citric acid encapsulated in polystyrene.

Advantageously, the sheet is formed by an extrusion process utilizing the compounded polyolefin. The final extrusion process renders a sheet with excellent thermal properties and cut resistance. In the preferred process, the foamed polyolefin sheet is suitably embossed using matte chill rolls. Injection molding is usually not suitable for the manufacture of foamed thin walled containers and plates due to rheology limitations.

The aesthetically pleasing disposable microwaveable containers and plates exhibit (a) a rolling undulent surface at least on one side of the container or plate, (b) exhibit a melting point of at least 250°F and (c) the container or plate is dimensionally stable and resistant to grease, sugar, and water at temperatures of at least 220°F and (d) is of sufficient toughness to be resistant to cutting by serrated disposable flatware.

Extenders such as calcium carbonate and clay have been traditionally used in disposable plastic foodservice articles with low cost as the primary concern, i.e., these fillers are usually selected for cost reduction rather than reinforcement. For example, calcium carbonate is a cheap, hard, and abrasive filler which delivers moderately low reinforcement (even when coupled) due to its low aspect ratio and highly irregular particle structure. In the case where microwaveability is desired for the plastic disposable foodservice article, the not so perfect solution has been the use of relatively expensive high heat polystyrene based materials (e.g., unfilled PPO and SMA engineering resins), where PPO refers to polyphenylene oxide and SMA refers to styrene-maleic anhydride copolymer.

The foamed polypropylene and polypropylene ethylene copolymer or blend containers and plates of this invention having a rolling undulent surface have overcome the disadvantages of the prior art type containers. The plates, bowls, cups, trays, buckets, souffle dishes and lids of this invention are significantly superior to prior art products.

Polyolefins such as polypropylene and polypropylene polyethylene copolymers or blends are compounded by pre-blending the polyolefin with the endothermic blowing agent coated with polystyrene or alpha methyl polystyrene and other additives including coupling agents, color concentrates, pigments, antioxidants, lubricants, nucleating agents, antistatic agents, etc. This mixture is conveyed into the feed section addition point of a twin screw compounding extruder. Alternatively, the components are advantageously fed separately into the same or at different points of addition, using combinations of volumetric and/or gravimetric (i.e., loss in weight type) feeders.

For white pigmentation, titanium dioxide is preferred due to combination of brightness, and opacity, as well as stability during processing and final use. Other pigments may suitably be employed. Surface treatment may be optionally used to further enhance wetting, dispersion, compatibility with matrix resins whereas the titanium dioxide forms may be of the rutile or anatase type. For black pigmentation, carbon black is preferred due to a combination of desirable characteristics such as blackness, and dispersibility, the latter of which can be carefully controlled by choice of particle size and surface chemistry. Carbon black is amorphous carbon in finely divided form which is made by either the incomplete combustion of natural gas (channel black) or by reduction of liquid hydrocarbons in refractory chambers (furnace black). Other pigments that may be suitably employed include organic and inorganic pigments. White pigments may be titanium dioxide, zinc sulfide or calcium sulfate. Color has become a critical concern of plastics manufacturers because product appearance is influencing consumers more than ever before. Colorant manufacturers are responding to these market needs by providing a wide range of colorants for use in an increasing number of resins. It is understood that only FDA approved colorants are employed in this invention wherein the containers and plates come in contact with food.

The two types of colorants most widely used to color plastics are pigments and dyes. A pigment is a colorant that is insoluble and is dispersed as discrete particles throughout a resin to obtain a color. Pigments can be either organic or inorganic compounds. A dye is a colorant that is soluble in a resin. Dyes are organic-based colorants. Organic colorants tend to be brighter, stronger, and more transparent than inorganics, which are duller and more opaque because they are derived from minerals and have a larger particle size.

There are several items that need to be addressed when choosing colorants to match a color in a designated resin. The processing temperatures of the resin are important since many colorants will burn out if they are processed at too high a temperature. Some colorants are not chemically compatible with some resins and may bleed or change color. Light stability of a colorant can be a determining factor if the product is to be used outdoors. In food packaging applications of this invention, there may be restrictions on the types of colorants that can be used, i.e., heavy metal-free colorants or colorants sanctioned for use by the FDA for food-contact applications.

Pigments can be identified by their colorant families and properties. Commonly used inorganic types include titanium dioxide, zinc sulfide, iron oxides, chromates, cadmiums, chromium oxides, ultramarines, mixed oxides, and carbon black. Titanium dioxide and zinc sulfide are white pigments that can be used in most resins. Iron oxides come in red, yellow, brown, and black. Their heat stability varies with color, the reds having the best stability. They are used in a variety of resins, depending on the processing temperature of the resin. Chromium oxides are green and exhibit excellent heat and light stability. Ultramarines come in blue, pink, and violet shades, and work in many resins. Mixed metal oxides include yellow nickel titanates and blue and green cobalt aluminates. They can be used in a variety of resins and have excellent heat and light stability. Carbon black is the most commonly used black colorant.

Organic pigments are available in a wide range of colors, also. Typical red organics are quinacridone, disazo condensation, monoazo, naphthol, and perylene types. A newer type called Diketopyrrolopyrrole has also appeared. Yellow pigments are disazo, isoindolinone, diarylide, and quinophthalone. Phthalocyanine pigments are shades of blue and green. Quinacridone and dioxazine pigments are examples of violet colorants. Quinacridones are also available in a magenta color. More so than inorganic pigments, organics can be difficult to disperse. Poor dispersion results in the formation of clusters of particles called agglomerates, which can be seen as visible specks in the resin and can cause loss of mechanical strength. The heat and light stability of organics varies with the particular pigments.

Dyes come in a variety of shades and are most useful when a totally transparent system is needed. Some dye classes are the azo, perinone, quinoline, and anthraquinone types. Anthraquinones and perinones have better light and heat stability, although there are variations within the class. Dyes can be better for use than pigments because they are very strong and do not have the dispersion problems associated with pigments.

Most colors cannot be obtained using a single colorant and require a mixture of several colorants. Plastics processors seldom do their own coloring, but buy one of the several products on the market. Most commonly used are precolor, dry color, liquid color, and color concentrates. Each form has its own reason for existence whether it is cost, inventory control, ease of use, or flexibility in processing.

Precolor, or compound, is colored resin ready for use by the plastics processor. It is convenient and easy to use because it needs no mixing. The disadvantage is that inventories must be kept in each color for each resin used, and many suppliers require significant minimum order quantities for custom colors.

Dry color comes in powder form, is inexpensive, and often is used for small batch coloring. However, without proper handling equipment one can expect to generate dusting, less than optimal dispersion, and even contamination problems. Also, it can be difficult to clean out the line. Special care is required to produce consistent quality end products.

Liquid color is somewhat easier to use and does not have many of the problems that accompany dry color. Liquid color is made up of the desired mixture of colorants in a multipurpose liquid base. Liquid is easier to clean in the line, eliminating the possibility of cross-contamination. The carrier aids dispersion and can be loaded so that letdown ratios of 100:1 are allowed. The negatives are that special pumps are often necessary for thermoplastics processing and the liquid does not always mesh well with properties of certain types of resins.

Color concentrates consist of a resin carrier compounded with high loadings of pigments or dyes. They usually are available in pellet or diced form and are in two types: (1) application specific-those concentrates having the chemical makeup that matches the process resin-and (2) universal concentrates-those that can be used with several different resins.

Universal concentrates are generating more interest as manufacturers needing a multitude of resins try to keep low color inventories. Processing is easier and less messy than with either dry or liquid colorants since the product is in solid form.

Carbon blacks are finely divided forms of amorphous carbons produced either by incomplete combustion of natural gas (called channel blacks and made by scraping deposited soot blacks off iron channels located above the smoky flame) or by reduction of liquid hydrocarbons in refractory chambers (furnace blacks).

As pigments, carbon blacks are known for blackness, strength, rheology, and dispersibility, which is a function of the particle size and surface. Carbon blacks are among the smallest in size and highest in surface area of all pigments. Furnace blacks have larger particle sizes than channel blacks.

Carbon blacks are available in loose and pelleted forms. The loose blacks normally pose severe dusting problems; the pelleted forms are denser and easier to handle but harder to disperse.

These high-performance pigments are Pyrazonone pigments, which offer good heat resistance, good lighffastness and migration resistance in the reds, but relatively poor lighffastness in the oranges.

The metallized azos are monoazos precipitated from a metal salt or complex or laked on an absorptive surface. Primarily in the maroon and red shades, these pigments have good migration resistance, poor to good heat stability, and fair to good lighffastness. Although chemical resistance is fairly good, the relatively weak chelate bonds make these pigments subject to demetallization in systems known to be highly acidic or basic.

Popular pigments in this group include:
* Lake Red C, also available in orange that can be blended with blue-reds to give low-cost bright red shades;
* Permanent Red 2B, available in the blue-shade calcium pigments and yellow-shade barium pigments, characterized by clean, bright, and strong colors, better heat stability, and fair to good lighffastness;
* Lithol Red, which is low-cost, but duller, with poor lighffastness; and
* Pigment Scarlet.

The twin screw extruder provides sufficient mixing action to effectively cause the wetting and dispersion of the foaming agent into the polymer matrix. The twin screw extruder may be of the co-rotating or counter-rotating type, where each type is equipped with different screw flight elements which are appropriate for the feed, mixing, and melt metering zones. The discharge zone normally consists of a strand die where the exiting molten material strands are quenched in a circulating water bath followed by knife cutting into pellets.

Low molecular weight additives such as waxes and other lubricants are suitably used as process aids to reduce the melt viscosity and improve throughput. Other additives may include nucleating agents and antistatic agents. Antioxidants may be added in small amounts, generally less than one weight percent, to minimize shear and thermal degradation of the foamed polypropylene or foamed polypropylene polyethylene copolymer or blend during the extrusion and forming processes as well as to promote the chemical stability of the sheet prior to and during final article use. Suitable antioxidants are advantageously selected from phenolic and phosphite types of antioxidants produced by Ciba-Geigy and General Electric Company.

The containers in the form of a 9.0-inch plate at a basis weight of about at least 300 pounds per 3000 square foot ream have a SSI rigidity of at least 400 grams per 0.5 inches.

SSI rigidity is measured with the Single Service Institute Plate Rigidity Tester originally available through Single Service Institute, 1025 Connecticut Ave. NW, Washington D.C. This test is designed to measure the rigidity (i.e. resistance to buckling and bending) of single service paper and plastic plates, bowls, dishes, and trays by measuring the force required to deflect the rim of these products a distance of 0.5 inch while the product is supported at its geometric center. Specifically, the plate specimen is held by a spring loaded clamp on one side and is center fulcrum supported. The rim or flange side opposite to the clamped side is subjected to 0.5 inch deflection by means of a motorized cam assembly equipped with a load cell, and the force (grams) is recorded. SSI rigidity is expressed as grams per 0.5 inch deflection. A higher SSI value is desirable since this indicates a more rigid product. All measurements were done at TAPPI conditions requiring a temperature of 73°F and geometric mean averages for the machine and cross machine direction are reported. Fort James' containers and plates of this invention have a comparable or higher SSI rigidity than commercial plates manufactured at higher cost.

Plastic cast sheet extrusion equipment is suitable for the manufacture of multilayered or single layered foamed polyolefin sheets. In Figure 1 a process is shown for the manufacture of a single layer foamed polypropylene sheet. Previously compounded and pelletized mixtures of polypropylene, blowing agent, and other additives are gravity fed by a hopper (10) into the feed zone of a single screw extruder system. Primary extruder (11) has a 2 inch diameter screw with a 24/1 length to diameter ratio. Optionally, multilayer coextruded sheet can be produced by utilizing at least one additional single screw extruder (12, 13, 14) in conjunction with a combining feedblock with proper melt piping and manifold arrangements. Suitably one to seven screw extruders are employed, preferably three. A flexible lip flat sheet die (15) having a width of 31 inches was used.

The sheet of this invention (16) enters the sheet takeoff portion (i.e., after the molten material exits the die) comprising a three-roll polishing/casing unit (17) with individually temperature controlled rolls, a two-rubber roll sheet pull unit (18), and a dual turret, dual shaft winder, whereby only one shaft winder roll (19) may be used. The three takeoff units are mechanically tied together, are on a common track, and can be automatically traversed from close die lip proximity to about 36 inch distant. During the extrusion process, the distance between the die exit and the casting unit was maintained at 2 inches. These three chrome rolls comprising the sheet casting unit are individually temperature controlled by integral oil circulating pumps and heat exchangers and nip gaps are adjustable. A speed differential between cast rolls and pull rolls is normally maintained such that pull roll speed is approximately within ten percent (10%) of cast roll speed. Achievable line speeds are in the range of 1-12.5 feet per minute, while for a sheet on the order of 30 mil thick, the line speed is about 5-6 feet per minute. The sheet is wound on a roll (19). Table 1 shows the sheet process conditions employed for the sheet extrusion of foamed polypropylene and the unfilled polypropylene control. These sheets suitably have a basis weight of about 300 to 400 Ibs., per 3000 square foot ream preferably about 310 to 320 per 3000 square foot ream.

Thermoforming is the pressing or squeezing of pliable material into final shape. In the simplest form, thermoforming is the draping of a softened sheet over a shaped mold. In the more advanced form, thermoforming is automatic, high speed positioning of a sheet having an accurately controlled temperature into a pneumatically actuated forming station whereby the article's shape is defined by the mold, followed by trimming and regrind collection.

Forming techniques other than conventional thermoforming are also suitable for the manufacture of the containers and articles of the present invention. These forming techniques include variations such as presoftening the extruded sheet to temperatures below the final melting temperature, cutting flat regions (i.e., blanks) from the sheet, transfer of blanks by gravity or mechanical means into matched molds whereby the blanks are shaped into the article by heat and pressure. The sheet from which the blanks have been cut out is collected as regrind and is recyclable. Conventional paperboard pressing equipment and corresponding forming tooling is optionally modified to produce articles of this invention.

The extruded sheet used in the suitable forming, and thermoforming process, or the preferred thermoforming process as shown in Figure 2 has a thickness of about 0.010 to 0.080 inches, suitably 0.010 to 0.050 inches, and preferably 0.015 to 0.025 inches. The extruded sheet comprises foamed isotactic polypropylene homopolymer as base resin, preferably having a melt flow index in the range 0.1-5.0, more preferably 0.2-2.0. Foamed copolymers or blends with ethylene levels in the range of 1-10 mol percent, more preferably 2-5 mol percent, are optionally used.

The melt flow rate (MFR) or melt index is a common and simple method for determining the flow properties of molten polymers. Resin is introduced and melted in a cylindrical space. After temperature equilibration is reached, a weight is used to push a plunger vertically downward whereby the resin is extruded through a narrow orifice. The usual test temperature for polypropylene is 230°C and the load is 2.16 Kg. Extruded material is collected and weighed and the time required to extrude a specific weight is recorded. MFR is expressed as grams per 10 minutes, which is the weight of material extruded in a 10 minute time period. MFR is inversely proportional to both polymer viscosity and polymer molecular weight. Advantageously one side of the sheet is matte finished using matte chill rolls.

Suitably the extruded sheet comprises coloring agents for aesthetic appeal, preferably titanium dioxide, carbon black, and other opacifying agents in the range of 0.5-3.0 weight percent based on total composition preferably 2.5 to 6.3 weight percent. Suitable color pigments have been discussed herein. The extruded sheet comprises minor amounts of other additives such as lubricants and antioxidants. Other pigments may suitably be employed. Surface treatment may be optionally used to further enhance wetting, dispersion, compatibility with matrix resins whereas the titanium dioxide forms may be of the rutile or anatase type. For black pigmentation, carbon black is preferred due to a combination of desirable characteristics such as blackness, and dispersibility, the latter of which can be carefully controlled by choice of particle size and surface chemistry. Carbon black is amorphous carbon in finely divided form which is made by either the incomplete combustion of natural gas (channel black) or by reduction of liquid hydrocarbons in refractory chambers (furnace black). Other pigments that may be suitably employed include organic and inorganic pigments and also discussed herein. White pigments may be titanium dioxide, zinc sulfide or calcium sulfate.

Suitably a process for forming a microwaveable, food contact compatible, disposable, rigid and strong foamed polyolefin container, plate, bucket, etc., wherein the foamed polyolefin is selected from foamed polypropylene, foamed polypropylene polyethylene copolymer or blend wherein an endothermic blowing agent coated with polystyrene or alphamethylstyrene is used to foam the olefins. This process comprises the steps of:
(a) forming an extrudable admixture of polyolefin and endothermic foaming agent;
(b) extruding said extrudable admixture of polyolefin resin and endothermic foaming agent at elevated temperature;
(c) passing the resulting extruded foamed polyolefin resin through a multiple roll stack, at least one roll of said roll stack having a matte finish;
(d) passing said extruded foamed polyolefin resin at least partially around said roll having either a smooth or a matte finish;
(e) controlling the speed of said extrusion process, the size, temperature and configuration of said roll stack such that the surface of said extruded foamed polyolefin resin not in contact with said roll has a granular structure; and
(f) thermoforming said extruded foamed polyolefin, resin, and recovering a container, plate, bucket, etc., having a rolling undulent surface and a surface with either a smooth or a matte surface finish exhibiting a melting point of no less than about 250°F; said container, plate, bucket, etc., being dimensionally stable and resistant to grease, sugar, and water at temperatures up to about 220°F and having sufficient toughness to be resistant to cutting by disposable flatware.

Advantageously, the undulent surface of said extruded foamed polyolefin resin not in contact with said matte roll is formed by traversing the extruded foamed polyolefin resin through a curvilinear path and at least partially solidifying the surface of said extruded foamed polyolefin resin not contacting said matte roll while that surface is in tension relative to the surface contacting said matte roll.

Preferably a process for forming a foamed polypropylene container, plate, bucket, tray, bowl, etc., comprises the steps of:
(a) forming an extrudable admixture of polypropylene resin and endothermic blowing agent;
(b) extruding said extrudable foamed polypropylene resin at elevated temperature;
(c) passing the resulting extruded foamed polypropylene resin through a multiple roll stack, at least one roll of said roll stack having either a smooth or a matte finish;
(d) passing said extruded foamed of polypropylene resin at least partially around said roll having a smooth or matte finish;
(e) controlling the speed of said extrusion process, the size, temperature and configuration of said roll stack such that the surface of said extruded foamed polypropylene resin in contact with said smooth or matte roll has a smooth or matted structure; and
(f) thermoforming said extruded foamed polypropylene, resin, and recovering a container, plate, bucket, etc., having a rolling undulent surface and exhibiting a melting point of no less than 250°F, said container, plate, bucket, etc. being dimensionally stable and resistant to grease, sugar, and water at temperatures up to about 220°F and having sufficient toughness to be resistant to cutting by serrated disposable flatware.

Our process for forming a foamed polyolefin sheet from polypropylene and polypropylene polyethylene copolymer or blend suitable for thermoforming undulatory containers and plates comprises the steps of:
(a) forming an extrudable admixture of said polyolefin resin and endothermic blowing agent;
(b) extruding said extrudable foamed polyolefin resin at elevated temperature;
(c) passing the resulting extruded foamed polyolefin resin through a multiple roll stack, at least one roll of said roll stack having a smooth or matte finish;
(d) passing said extruded foamed polyolefin resin at least partially around said roll having a matte finish;
(e) controlling the speed of said extrusion process, the size, temperature and configuration of said roll stack such that the surface of said extruded foamed polyolefin resin not in contact with said roll has a rolling undulent surface either a matte or a smooth surface finish in the opposing surface depending on the roll used in the stack; and
(f) the surface in contact with the matte roll has a matted surface; and the surface in contact with the smooth roll has a smooth surface, alternatively the surface not in contact with the roll has a rolling undulent texture.
(g) recovering a sheet having either a smooth or matted surface and a rolling undulent surface.

The foamed polypropylene and polypropylene polyethylene copolymer or blend sheets are suitably formed into containers including plates, bowls, cups, trays, buckets, soufflé dishes, and lids using a forming or thermoforming process disclosed herein. Suitably these articles of manufacture and containers are manufactured using the Comet Starlett Thermoformer Unit. This machine is capable of vacuum forming products from heat softened thermoplastic materials and is schematically depicted in Figure 2. Sheet portions (23) having dimensions of 17.5 inches by 16.25 inches were clamped on two opposing sides and inserted into an oven (22) equipped with upper (20) and lower (21) heaters.

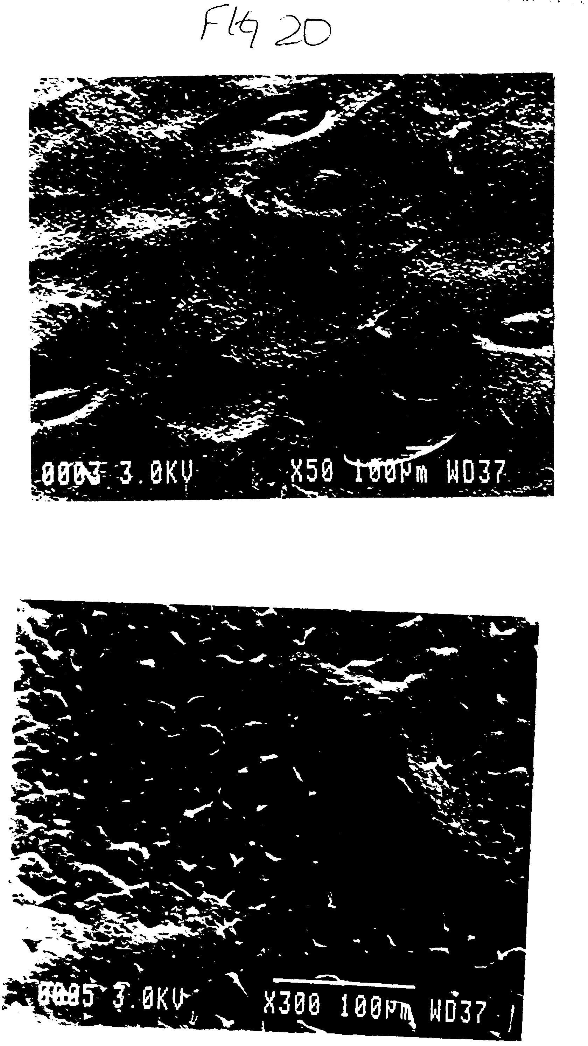

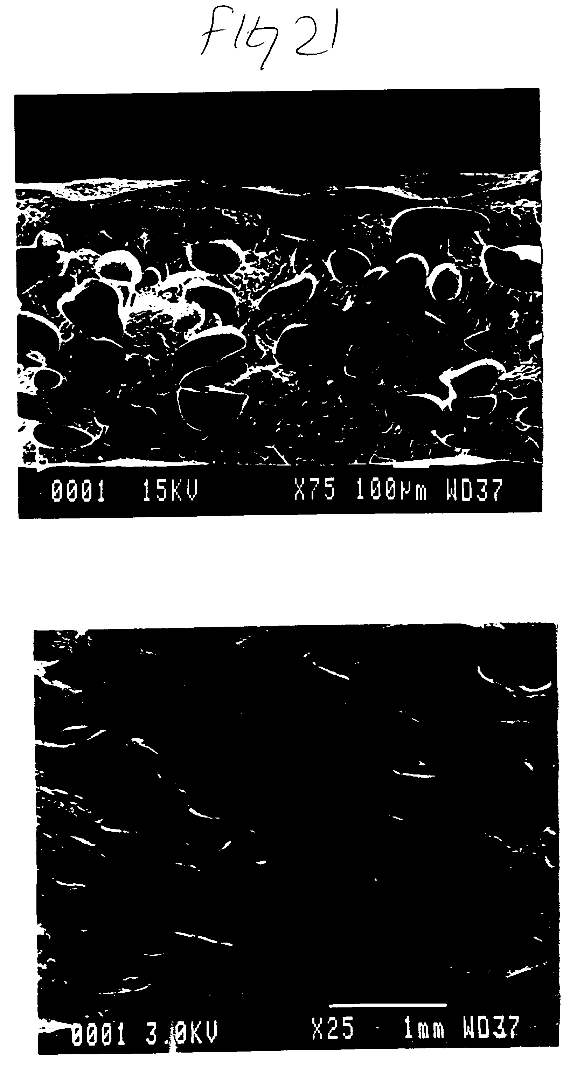

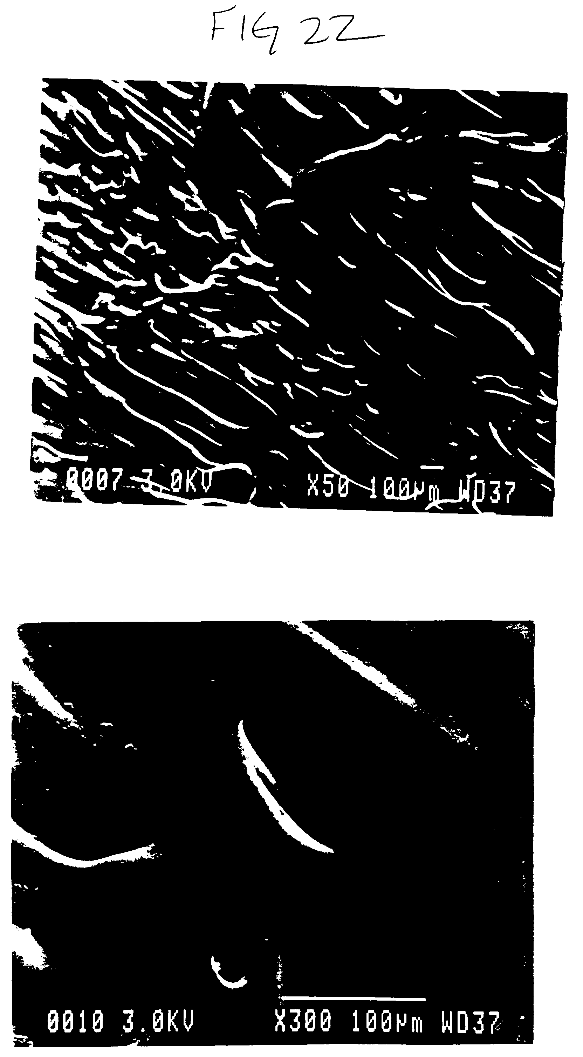

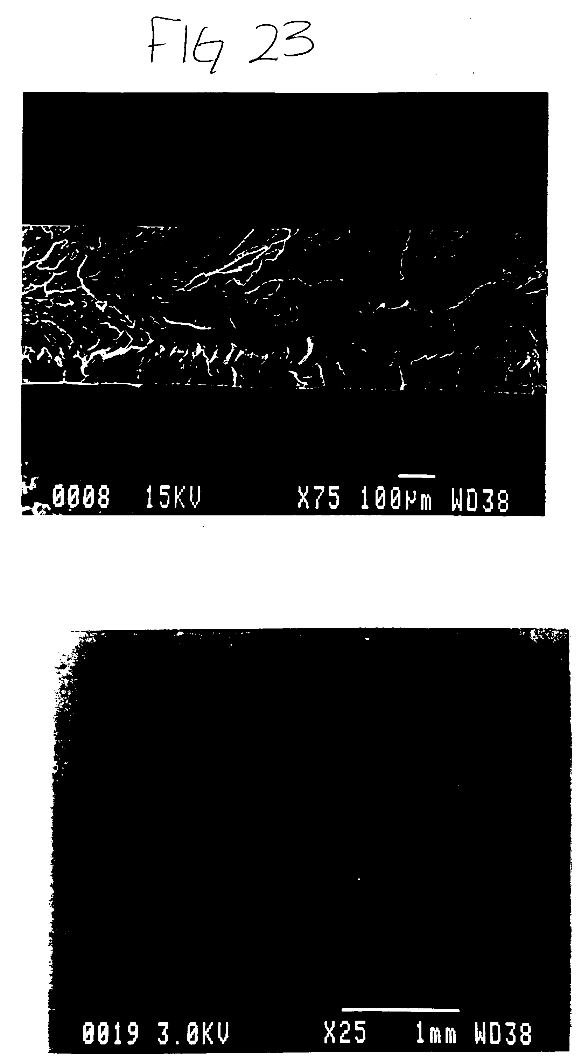

When the clamped and heat softened sheet (23) exits the oven (22), it may be vacuum formed by either procedure (A) or (B), both of which utilize only one mold which is fabricated from epoxy thermoset materials. Other suitable materials include aluminum, steel, beryllium copper, etc. Mode (A) uses a male mold (24) whereby the sheet is sucked up to conform to it by means of vacuum where the vacuum ports are present on the mold base as well as on the periphery side of the container (i.e., flange area). Mode (B) arrangement is such that the vacuum direction is opposite to mode (A), where again vacuum holes are located around the base and periphery. In the case of mode (B), a female mold (25) is used, and this arrangement is preferred since the air side of the sheet corresponds to the food contact side. The food contact side undergoes a beneficial texturizing effect as a result of the heat treatment which creates an undulatory surface as manifested by decreased gloss and increased surface roughness. This feature can be reasonably seen by reviewing Figures 20-23 where the rolling undulent structure of the plate is clearly shown in the black and white scanning electron photomicrograph. The photomicrograph was obtained from a 10 X 15 mm piece cut out of the plate bottom. The sample was mounted with surface of interest up on a specimen stub, and coated with gold/palladium. The stub was placed in a JEOL840A Scanning Electron Microscope (SEM). Photomicrographs of the samples were taken at 75X magnification, 30 degree tilt, 39 mm working distance at 3 kv.

Advantageously, other thermoforming arrangements are suitable and may be preferred in conventional sheet and web feed thermoforming commercial production operations. Alternative arrangements include the use of drape, vacuum, pressure, free blowing, matched die, billow drape, vacuum snap-back, billow vacuum, plug assist vacuum, plug assist pressure, pressure reverse draw with plug assist vacuum, reverse draw with plug assist, pressure bubble immersion, trapped sheet, slip, diaphragm, twin-sheet cut sheet, twin-sheet rolled forming or any suitable combinations of the above. Details are provided in J. L. Throne's book, *Thermoforming*, published in 1987 by Coulthard. Pages 21 through 29 of that book are incorporated herein by reference. Suitable alternate arrangements also include a pillow forming technique which creates a positive air pressure between two heat softened sheets to inflate them against a clamped male/female mold system to produce a hollow product. Metal molds are etched with patterns ranging from fine to coarse in order to simulate a natural or grain like texturized look. Suitably formed articles are trimmed in line with a cutting die and regrind is optionally reused since the material is thermoplastic in nature. Other arrangements for productivity enhancements include the simultaneous forming of multiple articles with multiple dies in order to maximize throughput and minimize scrap. In a suitable embodiment containers are produced which do not exhibit a rolling undulent surface.

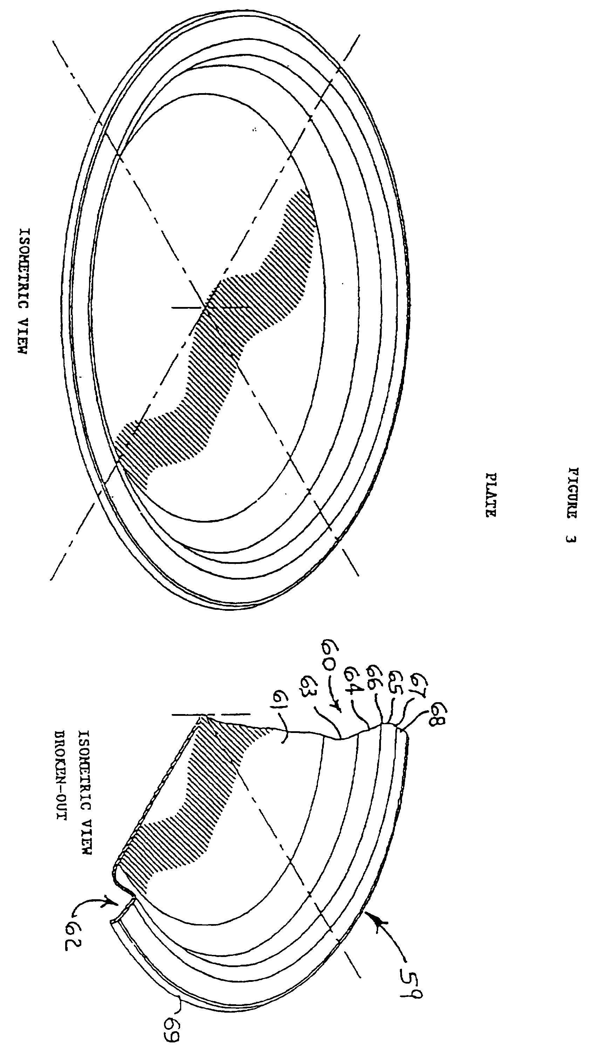

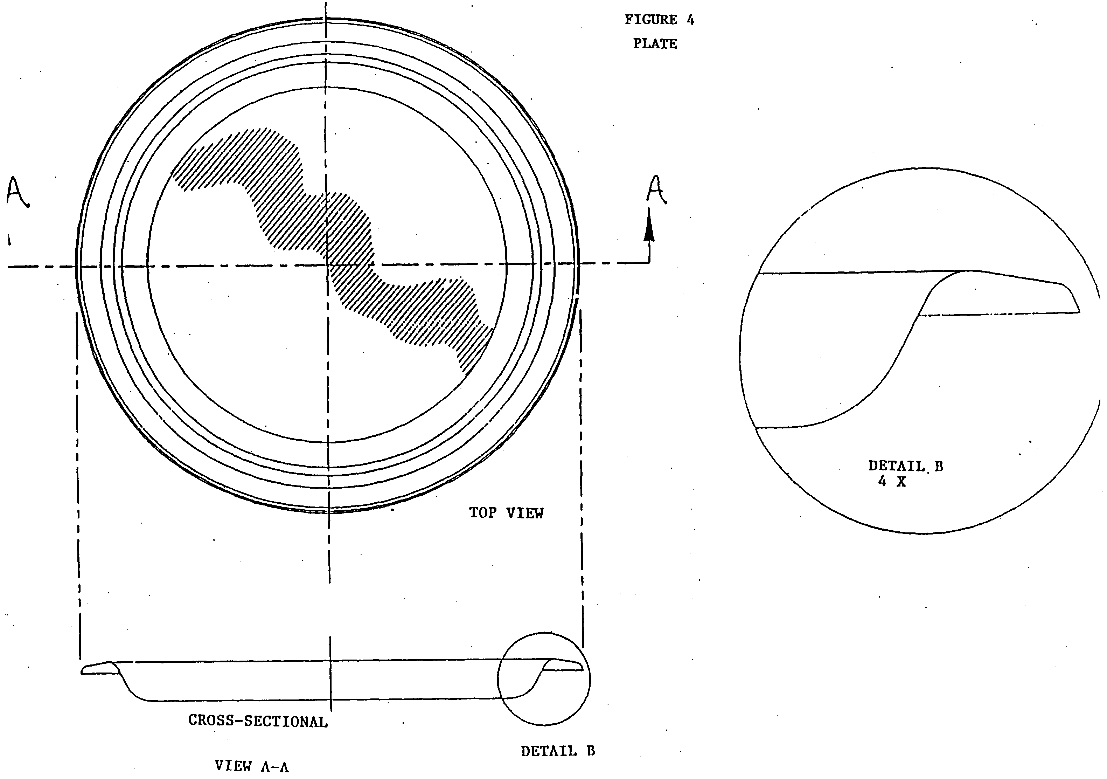

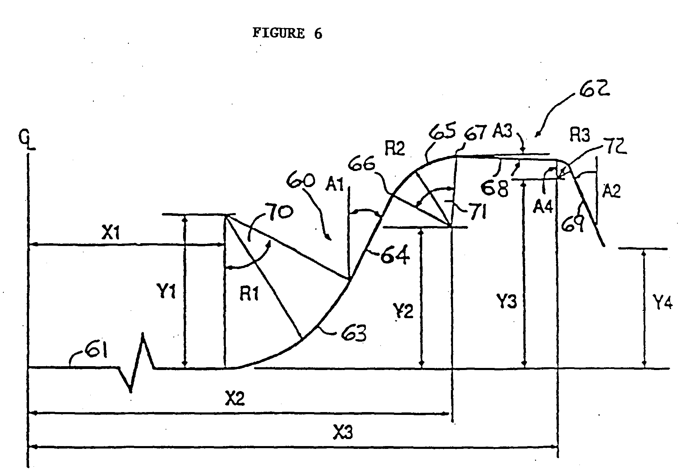

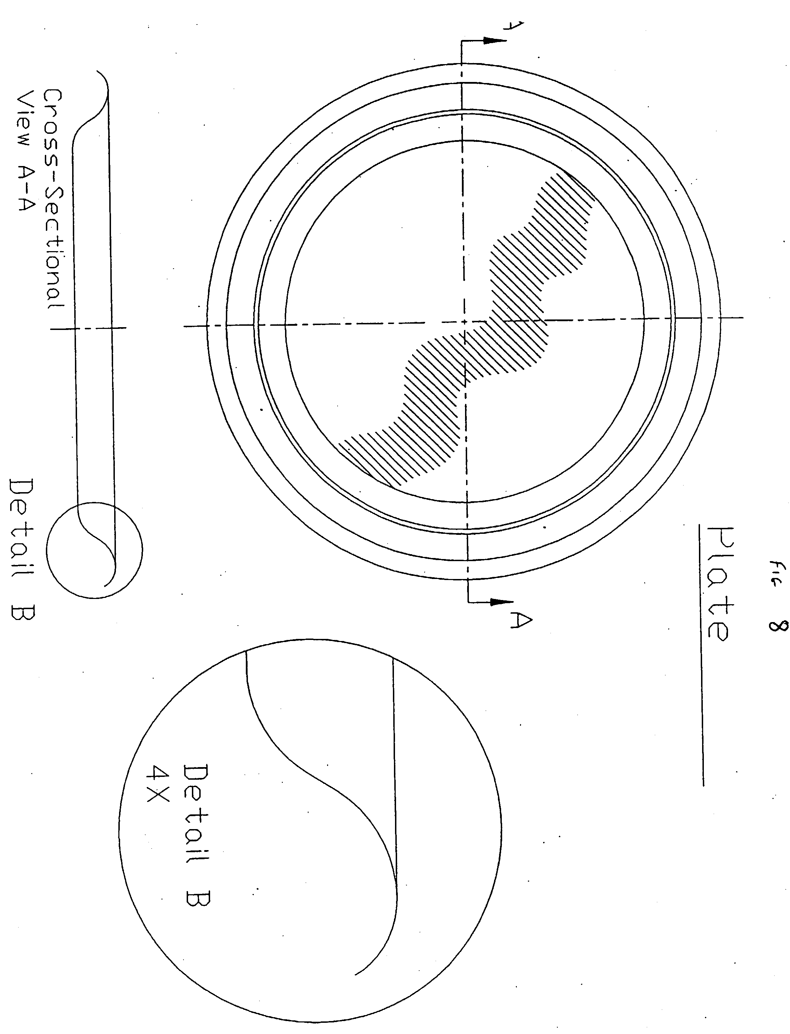

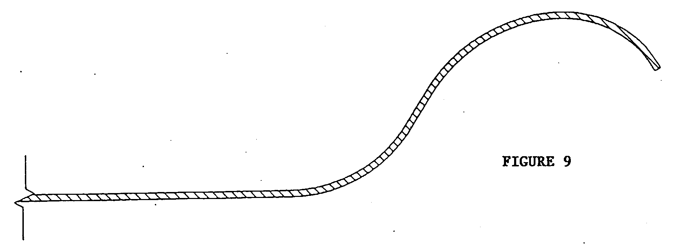

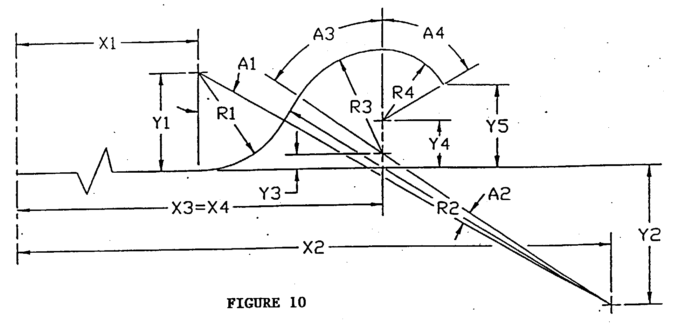

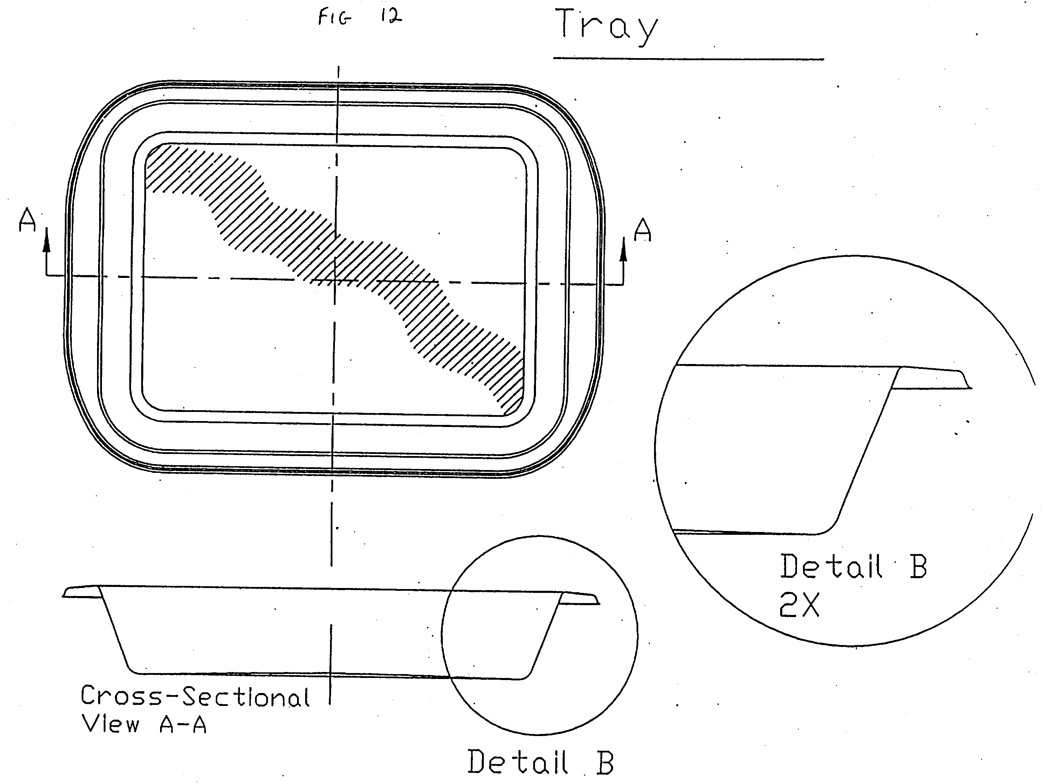

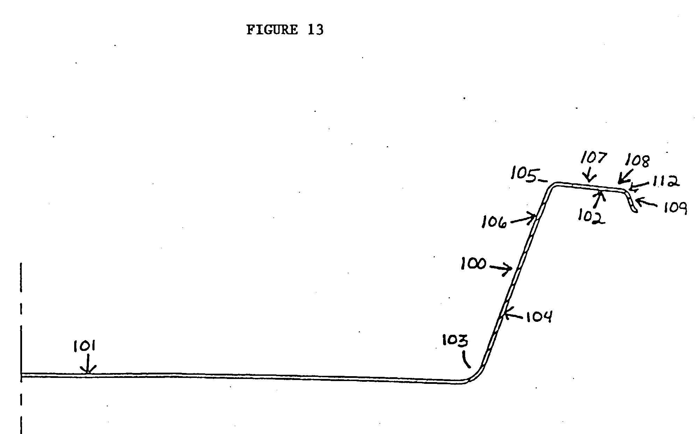

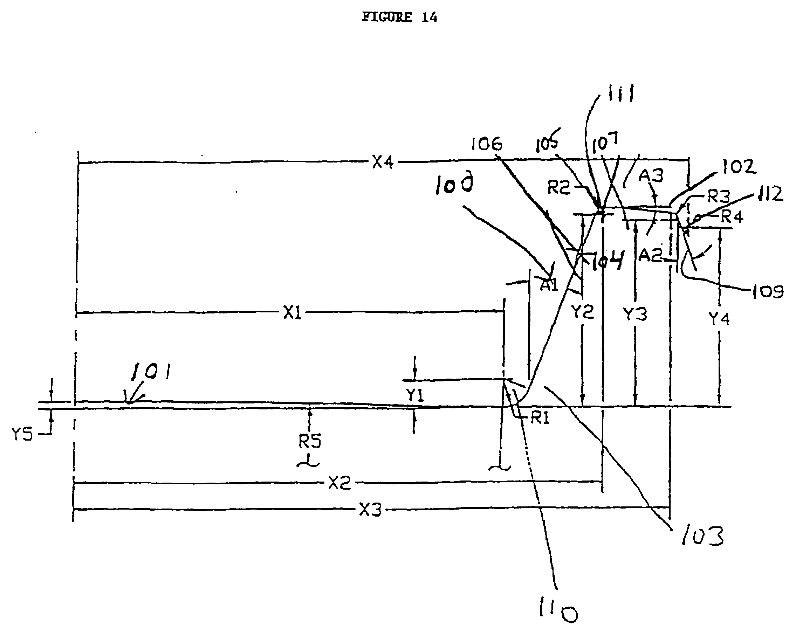

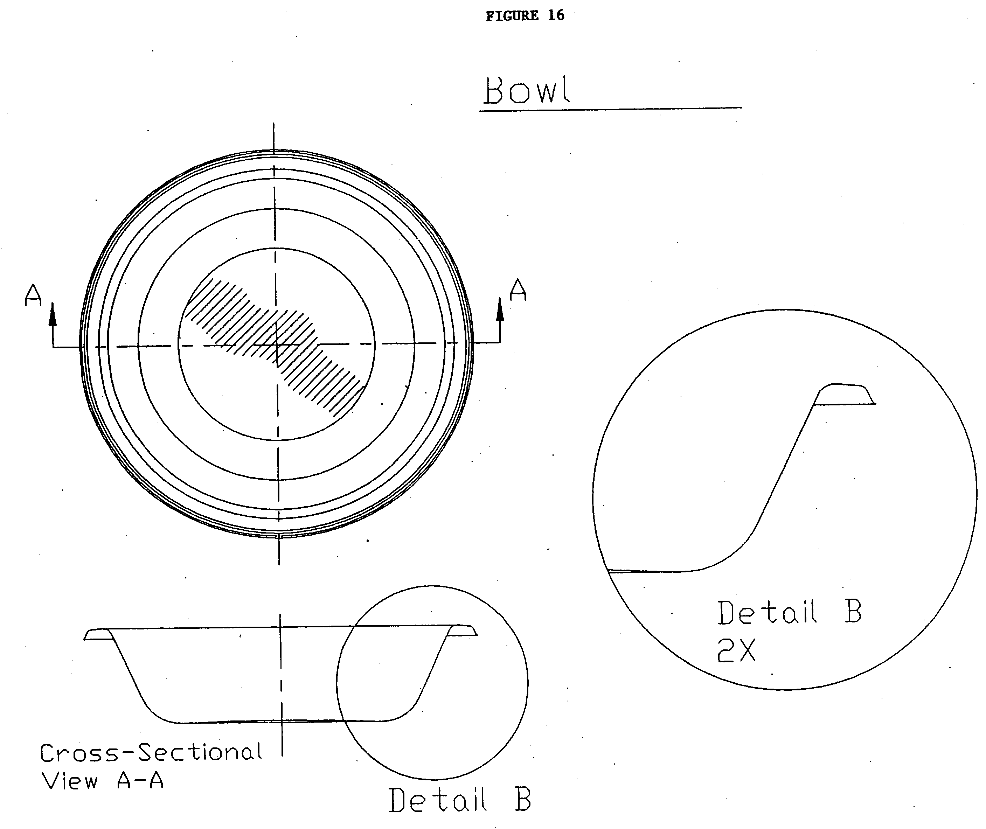

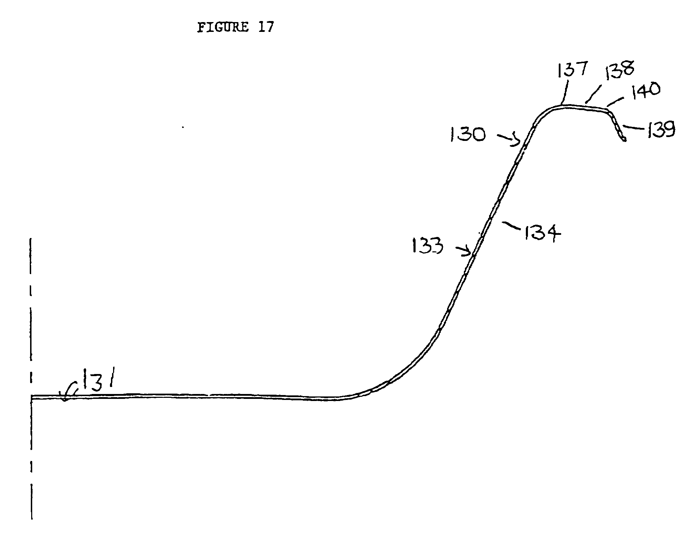

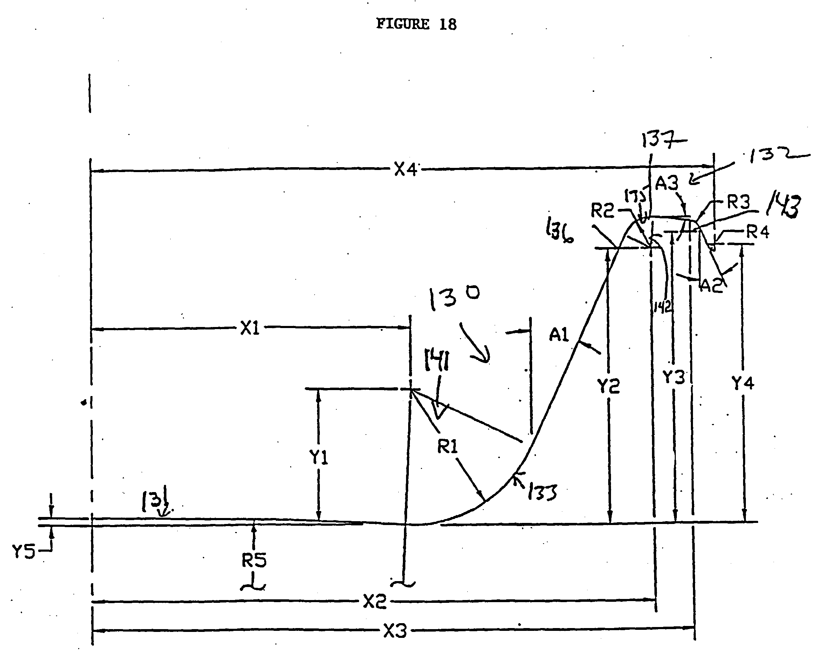

The sheet of the present invention is suitably formed into articles of manufacture such as containers, plates, bowls, trays etc. having a circular configuration. These containers may also be square or rectangular in shape having angular corners, such as found in a tray. Further, additional shapes such as triangular, multisided, polyhexal, etc., are contemplated including compartmented trays and plates as well as oval platters. In each contemplated embodiment, all corners are rounded or curved with the preferred embodiment of the present invention being depicted in Figures 3 through 19. The description of Figures 3 through 19 is illustrative of the present invention and various changes may be made by those skilled in the art without changing the essential characteristics and basic concepts of the invention.

In one embodiment of this invention, the plates have the DIXIE® Superstrong profile as illustrated in Figures 3 through 6 and also described in U.S. Patent 5,326,020 assigned to the assignee of the present invention and incorporated herein by reference into this application. Throughout the following description each of the dimensions are referenced with respect to a given diameter D, which in accordance with the present invention, as illustrated in Figures 3 through 6, is approximately 8.75 inches. However, the particular diameter of the container is not a critical limitation and is only set forth herein by way of example. It is the relationship between the various portions of the rim configuration which are essential.

The planar inner region (61) in accordance with the illustrated embodiment in Figures 3 through 6 has a radius X1 which is equal to approximately 0.3 D-0.4 D and preferably 0.348 D. Adjoining an outer periphery of the planar inner region (61) is a sidewall portion (60) including annular region (63) having a radius of curvature equal to approximately 0.05 D-0.06 D and preferably 0.0572 D with the center point thereof being positioned a distance Y1 from the planar inner region (61). Included angle (70) of the annular region (63) is from about 40° to about 70° and preferably about 60°-65° or approximately 62°. Adjoining the periphery of the annular region (63) is the first frusto-conical region (64) which slopes upwardly at an angle A1 with respect to the vertical from about 20° to about 35° and preferably about 25°-30° or approximately 27.5°. Additionally, the frusto-conical region (64) is of a length greater than about 0.015 D, preferably from about 0.025 D to 0.05 D and more preferably approximately 0.036 D. Further, adjoining the first frusto-conical region (64) is the arcuate annular region (65) which includes a radius of curvature in the range of 0.015 D to 0.03 D and preferably approximately 0.024 D with the center point thereof being positioned a distance Y2 from the planar inner region (61). The included angle (71) of the arcuate annular region (65) may range from about 61° to about 82° and is preferably 66° to 77° or about 73°. The second portion (67) of the arcuate annular region (65), that is the distal portion of the arcuate annular region (65), is positioned such that a line tangent to the curvature of the arcuate annular region (65) at the second portion (67) slopes downwardly and outwardly at an angle of approximately 0° to 12°.

The combination of the annular region (63) and arcuate annular region (65) should combine to position the second portion (67) of the arcuate annular region (65) in the manner set forth herein above. That is, the included angle (70) of the annular region (63) when combined with the included angle (71) of the arcuate annular region (65) with the first frusto-conical region (64) spanning there between, positions the second portion (67) of the arcuate annular region (65) in a manner such that the second frusto-conical region (68), which extends substantially tangentially from the distal end of the second portion (67) of the arcuate annular region (65) extends outwardly and downwardly at an angle of about 0° to 12°. The second frusto-conical region (68) is of a length in a range from about 0.03 D to about 0.05 D and is preferably 0.04 D. Because the second frusto-conical region (68) extends substantially tangentially from the second portion (67) of the arcuate annular region (65), the second frusto-conical region (68) extends outwardly and downwardly at an angle in the range from approximately 0° to 12° with respect to a horizontal plane formed by the planar inner region (101).

Adjoining an outer periphery of the second frusto-conical region (68) is the lip (69) which is in the form of yet another frusto-conical region which extends outwardly and downwardly from the second frusto-conical region (68). The lip (69) is of a length of at least 0.005 D and is preferably approximately 0.010 D. Further, the lip (69) extends at an angle A2 of no more than 45° from vertical, preferably approximately 15° to 30° with respect to the vertical plane.

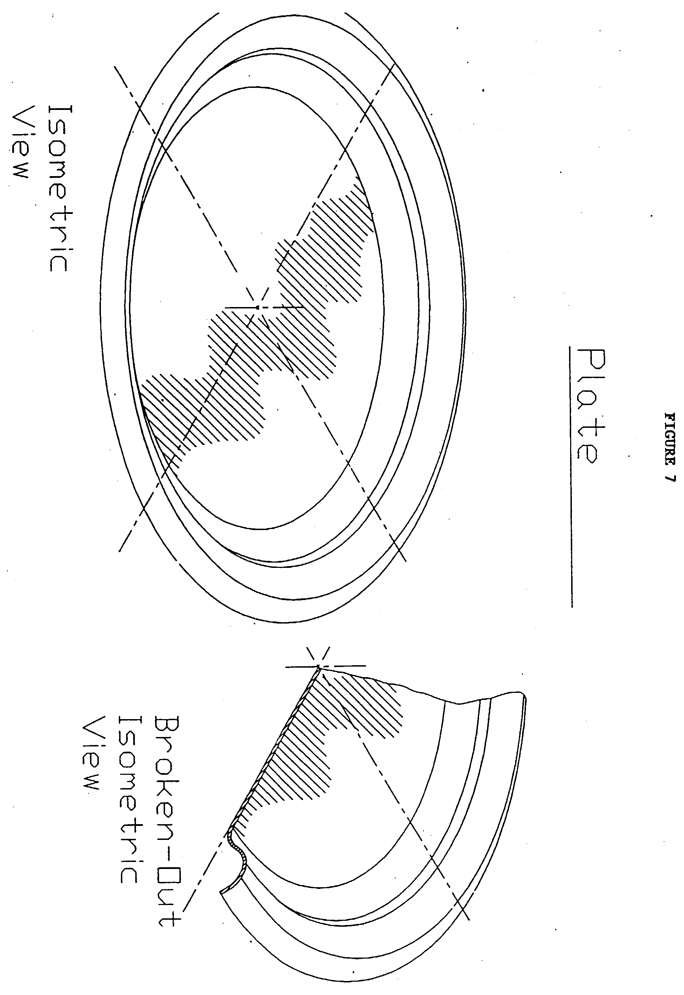

At the transition between the second frusto-conical region (68) and the lip (69) is a transition region (72). The transition region (72) includes a radius of curvature R3 which is in the range of about 0.008 D and 0.01 D and is preferably approximately 0.0092 D with the center point thereof being positioned a distance Y3 from the planar inner region (61). Additionally, the transition region (72) has an included angle A4 of approximately 48° to 70°. The plates disclosed in Figures 7 through 10 have the dimensions of the plates disclosed in U.S. Patent 5,088,040 and incorporated herein by reference in its entirety. These containers may have other features such as ridges, emboss, and deboss patterns suitable for enhancing the properties of the containers of this invention.

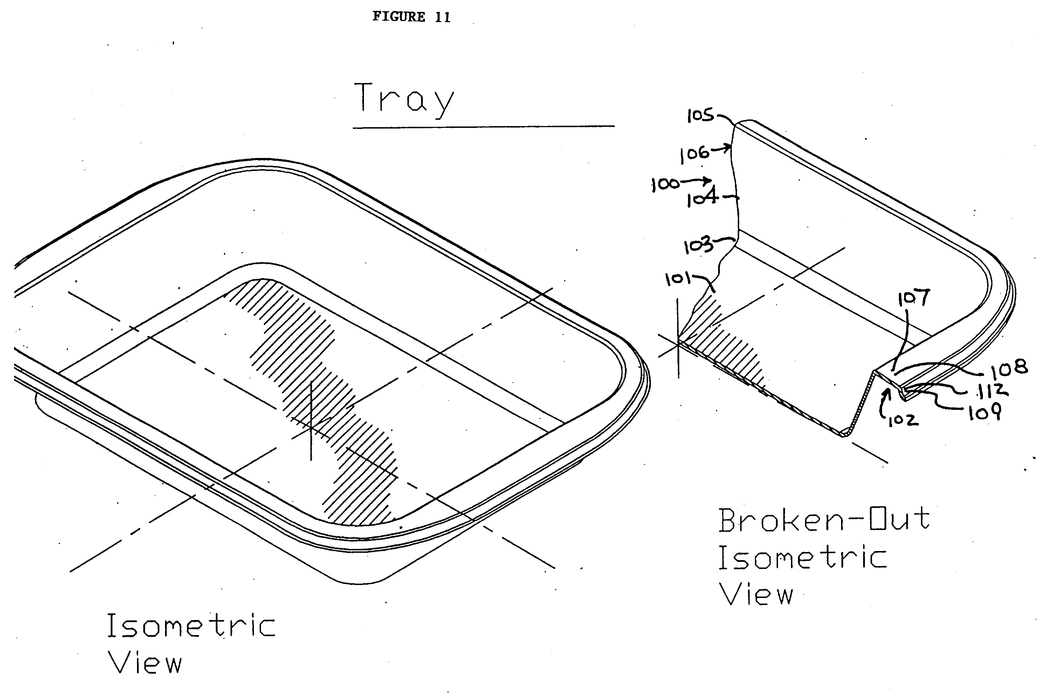

The description of Figures 11 through 14 is illustrative of the present invention, but it should be understood that these figures are not intended to limit the invention and that various changes may be made by those skilled in the art without changing the essential characteristics and basic concept of the invention. In one embodiment of this invention the trays have either the DIXIE® Superstrong profile as illustrated in Figures 11 through 14 and also described in U.S. Patent 5,326,020 assigned to the assignee of the present invention and incorporated herein by reference into this application. These trays may have other features such as ridges, emboss, and deboss patterns suitable for enhancing the properties of the trays of this invention. A representative tray is illustrated in Figures 11 through 14. Throughout the following description, each of the dimensions are referenced to either the length D1 or the width D2, which in accordance with the present invention as illustrated in Figures 11 through 14 are approximately 10.90 and 8.00 inches respectively. D1 is larger than or equal to D2. However, the particular length and width of these containers is not a critical limitation and is only set forth herein by way of example. It is the relationship between the various portions of the rim configurations which are essential. The planar inner region (101) in accordance with the illustrated embodiment in Figures 11 through 14 has a length X1 which is equal to approximately 0.3 D1 to 0.4 D1 and 0.3 D2 to 0.4 D2 and preferably 0.354 D1 and preferably 0.342 D2. Adjoining an outer periphery of the planar inner region (101) is a sidewall portion (100) including annular region (103) having a radius of curvature equal to approximately 0.02 D1 to 0.03 D1 and 0.025 to o.035 D2 and preferably 0.023 D1 and 0.031 D2 with the center point thereof being positioned a distance Y1 from the planar inner region (101). Included angle (110) of the annular region (103) is from about 40° to about 80° and preferably about 65° to 75° or approximately 69°. Adjoining the periphery of the annular region (103) is the first frusto-conical region (104) which slopes upwardly at an angle A1 with respect to the vertical from about 10° to about 50° and preferably about 15° to 25° or approximately 21°. Additionally, the frusto-conical region (104) is of a length greater than about 0.05 D1 and 0.055 D2, preferably from about 0.1 D1 to 0.2 D1 and 0.15 D2 to 0.25 D2 and more preferably approximately 0.15 D1 and 0.19 D2. Further, adjoining the first frusto-conical region (104) is the arcuate annular region (105) which includes a radius of curvature in the range of 0.005 D1 to 0.007 D1 and 0.007 D2 to 0.009 D2 and preferably approximately 0.006 D1 and 0.008 D2 with the center point thereof being positioned a distance Y2 from the planar inner region (101). The included angle (111) of the arcuate annular region (105) may range from about 40° to about 92° and is preferably 65° to 87°. The second portion (107) of the arcuate annular region (105), that is the distal portion of the arcuate annular region (105) is positioned such that a line tangent to the curvature of the arcuate annular region (105) at the second portion (107) slopes downwardly and outwardly at an angle of approximately 0° to 12°.

The combination of the annular region (103) and arcuate annular region (105) should combine to position the second portion (107) of the arcuate annular region (105) in the manner set forth herein above. That is, the included angle (110) of the annular region (103) when combined with the included angle (111) of the arcuate annular region (105) with the first frusto-conical region (124) spanning there between, positions the second portion (107) of the arcuate annular region (105) in a manner such that the second frusto-conical region (108), which extends substantially tangentially from the distal end of the second portion (107) of the arcuate annular region (105) extends outwardly and downwardly at an angle of about 0° to 12°. The second frusto-conical region (108) is of a length in a range from about 0.045 D1 to about 0.055 D1 and 0.030 D2 to about 0.040 D2 and is preferably 0.052 D1 and 0.034 D2. Because the second frusto-conical region (108) extends substantially tangentially from the second portion (107) of the arcuate annular region (105), the second frusto-conical region (108) extends outwardly and downwardly at an angle A3 in the range from approximately 0° to 12° with respect to a horizontal plane formed by the planar inner region (101).

Adjoining an outer periphery of the second frusto-conical region (104) is the lip (109) which is in the form of yet another frusto-conical region which extends outwardly and downwardly from the second frusto-conical region (108). The lip (109) is of a length of at least 0.006 D1 and 0.009 D2 and is preferably approximately 0.010 D1 and 0.013 D2. Further, the lip (109) extends at an angle A2 of no more than 45° from vertical, preferably approximately 10° to 30° with respect to the vertical plane and more preferably approximately 20°.

At the transition between the second frusto-conical region (108) and the lip (109) is a transition region (112). The transition region (112) includes a radius of curvature R3 which is in the range of about 0.005 D1 to 0.007 D1 and 0.007 D2 to 0.009 D2 and is preferably approximately 0.006 D1 and 0.008 D2 with the center point thereof being positioned a distance Y3 from the planar inner region (101). Additionally, the transition region (112) has an included angle A4 of approximately 48° to 80°.

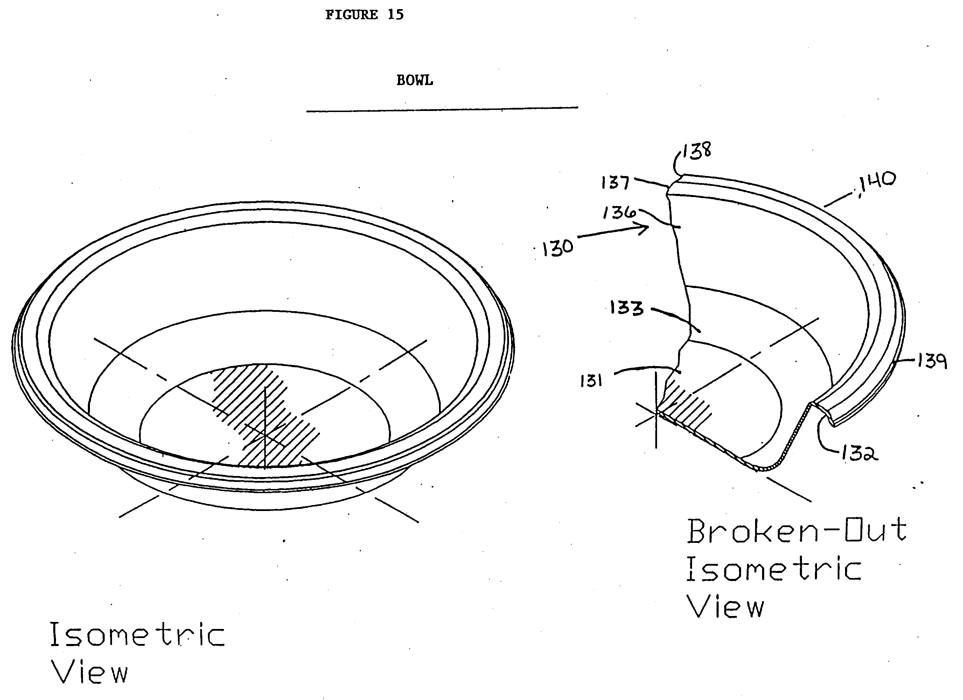

The description of Figures 15 through 18 is illustrative of the present invention, but it should be understood that these figures are not intended to limit the invention and that various changes may be made by those skilled in the art without changing the essential characteristics and basic concept of the invention. In one embodiment of this invention the bowl is illustrated in Figures 15 through 18. These containers may have other features such as ridges, emboss, and deboss patterns suitable for enhancing the properties of the containers of this invention. Throughout the following description, each of the dimensions are referenced with respect to a given diameter D which, in accordance with the present invention as illustrated in Figures 15 through 18, is approximately 7.5 inches. However, the particular diameter of the containers is not a critical limitation and is only set forth herein by way of example. It is the relationship between the various portions of the rim configuration which are essential. The planar inner region (131) in accordance with the illustrated embodiment in Figures 15 through 18, has a radius X1 which is equal to approximately 0.2 D to 0.3 D and preferably 0.25 D. Adjoining an outer periphery of the planar inner region (131) is a sidewall portion (130) including annular region (133) having a radius of curvature equal to approximately 0.05 D to 0.15 D and preferably 0.11 D with the center point thereof being positioned a distance Y1 from the planar inner region (131). Included angle (141) of the annular region (133) is from about 45° to about 75° and preferably about 60° to 70° or approximately 65°. Adjoining the periphery of the annular region (133) is the first frusto-conical region (134) which slopes upwardly at an angle A1 with respect to the vertical from about 15° to about 45° and preferably about 20° to 30° or approximately 25°. Additionally, the frusto-conical region (134) is of a length greater than about 0.1 D, preferably from about 0.17 D to 0.19 D and more preferably approximately 0.18 D. Further, adjoining the first frusto-conical region (134) is the arcuate annular region (135) which includes a radius of curvature in the range of 0.015 D1 to 0.030 D and preferably approximately 0.023 D with the center point thereof being positioned a distance Y2 from the planar inner region (131). The included angle (142) of the arcuate annular region (135) may range from about 45° to about 87° and is preferably 60° to 77°. The second portion (137) of the arcuate annular region (135), that is the distal portion of the arcuate annular region (135) is positioned such that a line tangent to the curvature of the arcuate annular region (135) at the second portion (137) slopes downwardly and outwardly at an angle of approximately 0° to 12°.

The combination of the annular region (133) and arcuate annular region (135) should combine to position the second portion (137) of the arcuate annular region (131) in the manner set forth herein above. That is, the included angle (141) of the annular region (133) when combined with the included angle (142) of the arcuate annular region (135) with the first frusto-conical region (134) spanning there between, positions the second portion (137) of the arcuate annular region (135) in a manner such that the second frusto-conical region (138), which extends substantially tangentially from the distal end of the second portion (137) of the arcuate annular region (135) extends outwardly and downwardly at an angle of about 0° to 12°. The second frusto-conical region (138) is of a length in a range from about 0.02 D to about 0.04 D and is preferably 0.03 D. Because the second frusto-conical region (138) extends substantially tangentially from the second portion (137) of the arcuate annular region (135), the second frusto-conical region (138) extends outwardly and downwardly at an angle in the range from approximately 0° to 12° with respect to a horizontal plane formed by the planar inner region (131).

Adjoining an outer periphery of the second frusto-conical region (134) is the lip (139) which is in the form of yet another frusto-conical region which extends outwardly and downwardly from the second frusto-conical region (138). The lip (139) is of a length of at least 0.01 D and is preferably approximately 0.017 D. Further, the lip (139) extends at an angle A2 of no more than 45° from vertical, preferably approximately 10° to 30° with respect to the vertical plane and more preferably approximately 25°.

At the transition between the second frusto-conical region (138) and the lip (139) is a transition region (143). The transition region (143) includes a radius of curvature R3 which is in the range of about 0.007 D and 0.012 D and is preferably approximately 0.009 D with the center point thereof being positioned a distance Y3 from the planar inner region (131). Additionally, the transition region (143) has an included angle A4 of approximately 48° to 80°.

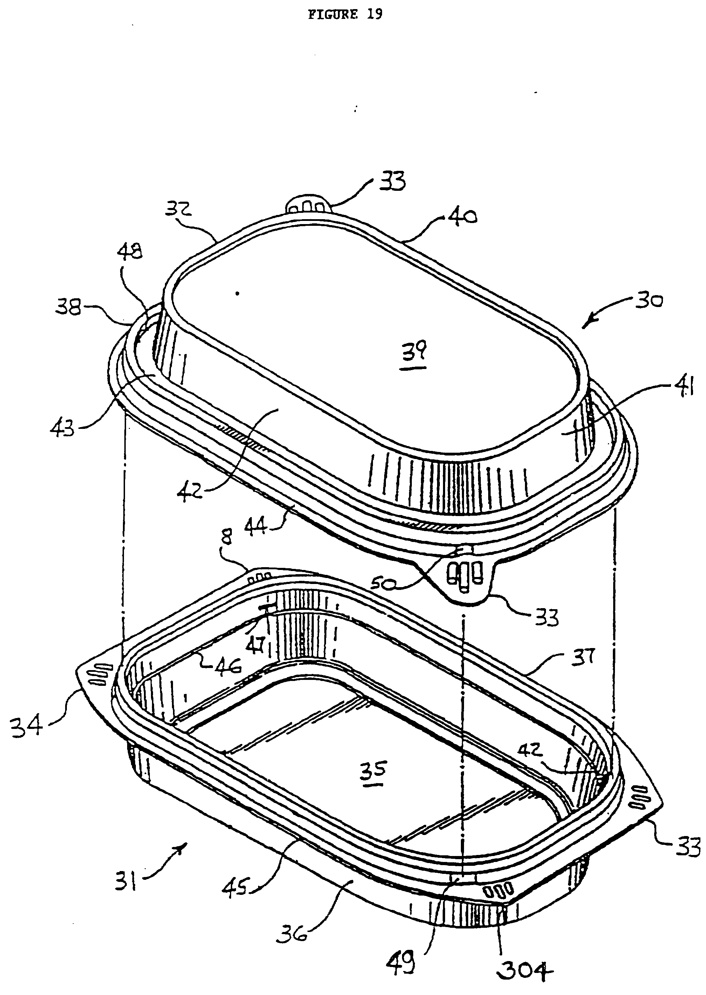

The description of Figure 19 is illustrative of the present invention, but it should be understood that this figure is not intended to limit the invention and that the various changes may be made by those skilled in the art without changing the essential characteristics and basic concept of the invention. The articles of manufacture of this invention may be formed as containers, and as a representative embodiment, a suitable container (including take out containers), will now be described in general with respect to Figure 19 wherein the lid and base formed as described in U. S. Patent 5,377,860 and incorporated herein by reference is illustrated. While the container illustrated in Figure 19 is oblong in configuration, the container may be round, oval, substantially rectangular or square as dictated by the contents which are to be placed within the container. The container (30) is formed of a base or bottom portion (31) and a lid (32). The lid (32) includes radially extending opening tabs (33) which cooperate with the radially extending opening tabs (304) of the base (31) in order to allow the consumer to readily open the sealed container. The base (31) of the container (30) includes a substantially planar bottom (35) and a substantially vertically extending peripheral sidewall (36). Integrally connected to the upstanding sidewall (31) is a sealing brim (37) which is received within a cooperating sealing brim (38) of the lid (32).

The lid (32) includes a substantially planar top portion (39) and a rim (40) extending about a periphery of the top portion (39). The rim (40) is provided in order to enhance the strength of an extended volume portion (41) of the lid (32). The rim (40) also serves to locate the base (31) on-the lid when the lid is used as a stand.

The extended volume portion (41) is formed by extension wall (42) positioned about the perimeter of the rim (40) and extending downwardly therefrom. The extension wall (42) is integrally formed with a horizontal lid reinforcing ring (43) which is substantially parallel to the top portion (39) of the lid (32). The outer perimeter of the lid reinforcing ring (43) is further integrally formed with the sealing brim (38). Also, extending radially outward from the sealing brim (38) is a second horizontal lid reinforcing ring (44) which extends substantially parallel to the top portion (39) as well.

Similarly, the base (31) includes a horizontal lid reinforcing ring (45) which extends from the periphery of the sealing brim (37) for aiding in and maintaining the structural integrity of the sealing brim (37) as well as the container (30) as a whole. In addition to the reinforcing ring (45), a step (46) may be provided about an upper portion of the peripheral sidewall (36) for preventing nested units from becoming jammed together due to excessive interpenetration when stacked and nested. Also, formed in an upper portion of the sidewall (36) are undercuts (47) which cooperate with detents (48), only one of which is illustrated in Figure 19 at the integral connection between a brim (38) and lid reinforcing ring (43). The detents, when engaged in the undercuts (47), provide an audible indication that the container is in fact sealed. Additionally, undercuts (49) may be provided in an outer periphery of the brim (37) for receiving detents (50) formed in an outer portion of the brim (38) for again providing an audible indication that the container is sealed. While the container illustrated in Figure 7 shows detents and undercuts formed in both the inner and outer portions of the brims (47) and (38), respectively, it may be desired to provide respective detents and undercuts on only one side of the brim or to provide no undercuts and detents on either side of the brim.

The Parker Roughness method was used to determine roughness using the Messmer Parker Print-Surf Roughness. Operation procedure details are referenced in the Messmer Instruments Ltd. User manual for the instrument (Model No. M-90) which is distributed by Huygen Corporation. The flat specimen is clamped under 1 Mpa pressure against a narrow annular surface by a soft backing and the resistance of air flow of the gap between the specimen and the annulus is measured. The air flow is proportional to the cube of the gap width and the roughness is expressed as the root mean cube gap in units of micrometers. Higher Parker roughness values indicate higher degrees of surface roughness. Gloss is reported as "gloss units at 75 or 60 degrees". Gloss measurements were conducted following TAPPI Standard Method T-480-OM 92.

Hunter color a and b parameters were measured using TAPPI Method T 524 OM-94. The symbols L, a, b designate color values as follows: L denotes lightness increasing from zero for black to 100 for perfect white; a shows redness when plus, greenness when minus, and zero for gray; and b represents yellowness when plus, blueness when minus, and zero for gray.

Whiteness index was measured according to procedures outlined in the publication "Measurement and Control of the Optical Properties of Paper" by Technidyne Corporation, New Albany, Indiana.

The following examples are illustrative of the present invention. It should be understood that the examples are not intended to limit the invention and that various changes may be made by those skilled in the art without changing the essential characteristics and the basic concept of the invention.

### Example 1

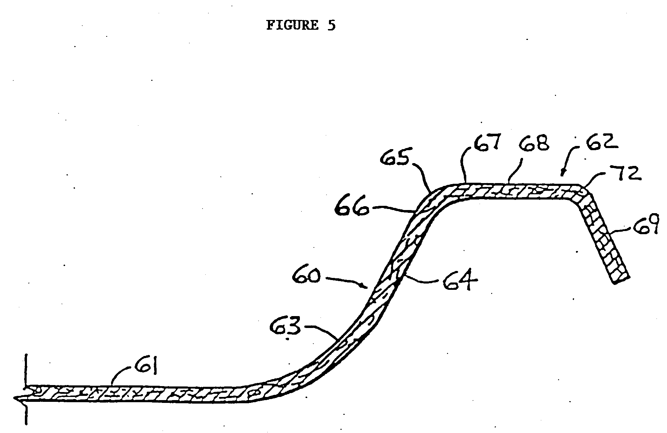

Polypropylene sheets (30 mil) with endothermic blowing agent coated with polystyrene were extruded, as shown in Figure 1, with conditions specified in Table 1. These extrusion process conditions may be varied as necessary to produce sheets which are of acceptable quality. Specifically, the operable temperature ranges for barrel zones 1, 2, and 3 are about 345 to 475°F. The adapter, feedblock, and die temperatures can all be in about the range of 430 to 480°F. The range of values for extruder drive amperes, extruder speed, melt pressure, die pressure, chill roll temperature, and line speed are about respectively, 10 to 25 amp., 50 to 100 RPM; 1500 to 2500 psi, 120 to 140°F, 3 to 8 FPM. 500 to 800 psi. Sheets were subsequently vacuum thermoformed into 8.75 to 11 inch plates having the profile as shown in Figures 5 through 10.

**Table 1**

| **Sheet Extrusion Conditions for Foamed Polypropylene** | |
|---|---|
| **CONDITION** | **FOAMED POLYPROPYLENE** |
| Barrel zone 1 (°F) | 395 |
| Barrel zone 2 (°F) | 425 |
| Barrel zone 3 (°F) | 475 |
| Adapter (°F) | 470 |
| Feed block (°F) | 470 |
| Die zones 1-3 (°F) | 470 |
| Extruder RPM | 80 |
| Drive amperes | 16 |
| Melt pressure (psi) | 1700 |
| Die pressure (psi) | 730 |
| Line speed (FPM) | 6.1 |
| Chill roll temp. (°F) | 130 |

## Claims

1. A microwaveable, food contact compatible, disposable, rigid and strong sheet having a softening point of no less than about 250°F and obtained by extruding an admixture consisting essentially of foamed polypropylene or foamed propylene-ethylene copolymer or blend of polypropylene and propylene-ethylene copolymer, and an endothermic blowing agent coated with polystyrene or poly-alphamethylstyrene, said sheet being thermoformable by application of vacuum into the shape of a container.

2. A process for the manufacture of a sheet as claimed in Claim 1, said process comprising the steps of mixing a polyolefin resin selected from polypropylene or propylene-ethylene copolymer or a blend of polypropylene and propylene-ethylene copolymer with a blowing agent coated with polystyrene or poly-alphamethyl styrene and optionally a pigment, converting the mixture at a temperature of about 380° to 480°F into a foamed sheet, and recovering the foamed sheet having a caliper in the range of about .015 to .120 in.

3. A process as claimed in Claim 2 comprising the steps of:
(a) forming an extrudable admixture of the polyolefin resin and an endothermic blowing agent coated with polystyrene or polyalphamethylstyrene; and
(b) extruding said admixture at elevated temperature;
(c) passing the resulting extrudate through a multiple roll stack, at least one roll of said roll stack having a matte finish;
(d) passing said extrudate at least partially around said roll having a matte finish;
(e) controlling the speed of said extrusion process, the size, temperature and configuration of said roll stack such that the surface of said extrudate not in contact with said matte roll has a matted structure; and
(f) recovering a foamed polyolefin sheet having a matted surface and a rough surface.

4. A process as claimed in Claim 3 characterised in that the surface of said extruded of foamed polyolefin resin not in contact with said matte roll is provided with a coarse-grained structure by traversing the foamed polyolefin resin extrudate through a curvilinear path and at least partially solidifying the surface of said extrudate not contacting said matte roll while that surface is in tension relative to the surface contacting said matte roll.

5. A process as claimed in Claim 2 wherein the blowing agent comprises an endothermic blowing agent coated with polystyrene or polyalphamethylstyrene, said process comprising the steps of:
(a) forming an extrudable admixture of said polyolefin resin and said blowing agent;
(b) extruding said admixture at elevated temperature;
(c) passing the resulting extrudate through a multiple roll stack, at least one roll of said stack having a matte finish;
(d) passing said extrudate at least partially around said roll having a matte finish; and
(e) controlling the speed of said extrusion process, the size temperature and configuration of said roll stack such that the surface of said extrudate in contact with said matte roll has a matted structure; and
(f) recovering a foamed polyolefin extruded sheet having a matted surface.

6. A process for the manufacture of a container comprising the steps of (a) heat softening a sheet as claimed in Claim 1 or obtained by the process of any one of Claims 2 to 5 at a temperature of at least 260°F; and (b) vacuum forming the sheet in a mold controlled to form a container exhibiting an undulent surface on one side.

7. A process as claimed in Claim 6 wherein the heat softening of the sheet is conducted at a temperature of at least 330°F.

8. A microwaveable, food contact compatible, disposable, rigid and strong container exhibiting a melting point of no less than about 250°F and formed from an extruded polyolefin sheet consisting essentially of foamed polypropylene, or foamed propylene-ethylene copolymer or foamed blend of polypropylene and propylene-ethylene copolymer obtained using an endothermic blowing agent coated with polystyrene or polyalphamethylstyrene.

9. A container as claimed in Claim 8 characterised in that it exhibits an undulent surface on at least one side of the container surface.

10. A microwaveable container as claimed in Claim 8 or Claim 9 characterised in that the polyolefin component is said copolymer or said blend wherein the ethylene moiety comprises less than ten mole percent of the total copolymer or blend.

11. A container as claimed in Claim 8, Claim 9 or Claim 10 characterised in that the foamed polypropylene in the sheet is isotactic polypropylene homopolymer having a melt flow rate of about 0.1 to about 5.0.

12. A container as claimed in any one of Claims 8 to 11 and exhibiting a melting point of about 250° to about 330°F.

13. A container as claimed in any one of Claims 8 to 12 which exhibits a melting point of about 250 to about 372°F.

14. A container as claimed in any one of Claims 8 to 13 characterised in that the endothermic blowing agent includes a component selected from the group consisting of dicarboxylic acids of the formula HOOC-R-COOH and alkali metal salts thereof, wherein R is an aliphatic group of 1 to 25 carbon atoms which may contain one or more hydroxy substituents and may also contain unsaturation.

15. A container as claimed in Claim 14 characterised in that said component is selected from the group consisting of citric acid, fumaric acid, tartaric acid, sodium hydrogen citrate, monosodium citrate and mixtures thereof.

16. A container as claimed in Claim 15 characterised in that the blowing agent is a mixture of citric acid and sodium bicarbonate.

17. A container as claimed in of Claim 15 wherein the blowing agent is a mixture of monosodium citrate and NaHCO₃ in a molar ratio of 1:2 to 1:3 or sodium bicarbonate and citric acid.

18. A container as claimed in any one of Claims 8 to 17 having a basis weight of at least 300 Ibs. per 3000 square foot ream.

19. A container as claimed in any one of Claims 8 to 18 in the form of a plate.

20. A plate as claimed in Claim 19 having a diameter of 8.75 inches to 11 inches.

21. A plate as claimed in Claim 20 which, at a basis weight of at least 300 pounds per 3000 square foot ream, exhibits a SSI rigidity of at least 400 grams per 0.5 inch.

22. A plate as claimed in Claim 20 or Claim 21 having a diameter of about 10.25 inches.

23. A plate as claimed in any one of Claims 9 to 21 and which exhibits a melting point of about 250 to about 330°F.

24. A container as claimed in any one of Claims 8 to 18 in the form of a bowl, tray, bucket or soufflé dish, lid or cup.

25. A container as claimed in any one of Claims 8 to 24 which has been obtained by thermoforming optionally with the application of vacuum.

26. A process for forming a microwaveable, food contact compatible, disposable, rigid and strong, foamed polyolefin container wherein the polyolefin is selected from the group consisting of foamed polypropylene foamed propylene-ethylene copolymer or blend of polypropylene and propylene-ethylene copolymer, and a mixture of these wherein an endothermic blowing agent coated with polystyrene or polyalphamethylstyrene is used to foam the polyolefin, said process comprising the steps of:
(a) forming an extrudable admixture of the polyolefin resin and the endothermic blowing agent;
(b) extruding said extrudable foamed polyolefin resin at elevated temperature;
(c) passing the resulting extrudate through a multiple roll stack of rolls, at least one roll of said stack having a matte finish;
(d) passing said extrudate at least partially around said roll having a matte finish;
(e) controlling the speed of said extrusion process, the size, temperature and configuration of said roll stack such that the surface of said extrudate in contact with said matte roll has a matted structure;
(f) thermoforming said extrudate; and
(g) recovering a container having an undulent surface.

27. A process as claimed in Claim 26 characterised in that a container is recovered having both an undulent surface on one side and a relatively smooth surface on the other side.

28. A process as claimed in Claim 26 or Claim 27 wherein the container is a plate.

29. A process as claimed in any one of Claims 26 to 28 characterised in that step (f) is operated to produce a container having an undulent surface and a relatively smooth surface.

30. A process as claimed in any one of Claims 26 to 29 characterised in that the thermoforming is conducted at a temperature of about 260° to 310°F.

31. A process as claimed in Claim 30 characterised in that the thermoforming is conducted at a temperature of about 270° to 290°F.

32. A process as claimed in any one of Claims 26 to 31 characterised in that the container has a softening point of 250°F.
